# EUROPÄISCHE PATENTSCHRIFT

(11) **EP 3 231 596 B1**
(45) Veröffentlichungstag und Bekanntmachung des Hinweises auf die Patenterteilung: **10.10.2018**
(21) Anmeldenummer: 16164881.1
(22) Anmeldetag: 12.04.2016
(51) Int. Cl.: B27N 7/00, C09D 133/08, C09D 161/00, C09D 163/00, C09D 167/00, C09D 175/00, C09D 201/00, D21H 19/00

(54) **TRÄGERMATERIAL MIT MODIFIZIERTER HARZSCHICHT UND HERSTELLUNG DESSELBIGEN**
SUPPORT CARRIER MATERIAL WITH A MODIFIED RESIN LAYER, AND THE PRODUCTION THEREOF.
UN MATÉRIAU DE SUPPORT AVEC UNE COUCHE DE RÉSINE MODIFIÉE, ET SA PRODUCTION.

(43) Veröffentlichungstag der Anmeldung: 18.10.2017
(73) Patentinhaber: SWISS KRONO Tec AG, 6004 Luzern (CH)
(72) Erfinder: BRAUN, Roger, 6130 Willisau (CH); GIER, Andreas, 66399 Mandelbachtal (DE); MOISCH, Dorin, 6014 Littau (CH); STEINMANN, Pius, 6122 Menznau (CH)
(74) Vertreter: Maikowski & Ninnemann Patentanwälte Partnerschaft mbB

(56) Entgegenhaltungen:
- EP-A1- 2 272 668
- EP-A1- 2 873 523
- US-A1- 2013 331 484

## Beschreibung

Die vorliegende Erfindung betrifft ein mit einer Harzschicht versehenes Trägermaterial nach dem Oberbegriff des Anspruchs 1, die Herstellung des Harzes nach Anspruch 10 und ein Verfahren zur Herstellung des mit der Harzschicht versehenen Trägermaterials nach Anspruch 12.

### Beschreibung

Derzeit werden jedes Jahr weltweit mehrere hundert Millionen Quadratmeter Holzwerkstoffplatten, insbesondere in Form von Laminatböden oder auch als Wandpaneele, hergestellt und verkauft. Der Erfolg und die hohe Akzeptanz derartiger Holzwerkstoffplatten beruht vor allem auf dem guten Eigenschaftsprofil und der Möglichkeit der Imitation von naturnahen Oberflächen, insbesondere von Holzfussböden.

EP 2 873 523 A1 beschreibt eine Holzwerkstoffplatte mit modifizierte Oberfläche, umfassend mindestens eine Trägerplatte und mindestens einer auf mindestens einer Seite der Trägerplatte angeordnete Harzschicht, wobei auf der mindestens einen Harzschicht mindestens einer Primärschicht angeordnet ist, wobei die mindestens eine Primärschicht mindestens eine spezifische silanhaltige Verbindung aufweist.

Derartige Holzwerkstoffplatten weisen üblicherweise eine Oberfläche aus einem ausgehärteten Kunstharz auf. Insbesondere sind melaminbeschichtete Oberflächen im industriellen Fußboden- und Möbelbereich eine der am häufigsten auftretenden Oberflächen. Insbesondere im Innenbereich einsetzbare Holzwerkstoffplatten können eine Vielzahl von unterschiedlichen Dekoren z.B. Stein- oder Holzoptik, aufweisen. Diese Dekore werden durch Verwendung von geeigneten Dekorpapieren oder auch zunehmend im Direktdruck auf die entsprechenden Trägerplatten aufgebracht.
Neben der optischen Nachahmung wird zunehmend auch eine haptische Nachahmung angestrebt. Im Bereich der Holzdekore ist z.B. eine passende Holzhaptik wünschenswert, die angenehm warm und weich ist. Für Steinstrukturen hingegen ist eine naturnahe, kalte und harte Haptik wünschenswert.
Ein Ansatz zur Verbesserung bzw. Anpassung der Haptik besteht in der Einbindung von Füllstoffen wie z.B. Zellulosefasern oder Hohlkugeln in die melaminharzhaltigen Oberflächen. Weitere bekannte Lösungen sind melaminfreie Polymerbeschichtungen. Diese weisen allerdings weniger gute Gebrauchs- und Verarbeitungseigenschaften auf und sind teurer und weniger etabliert.

Es besteht nach wie vor ein Bedarf an geeigneten Lösungen zur Anpassung der Haptik und weiterer Oberflächeneigenschaften an die entsprechenden naturnahen Dekore.
Der Erfindung liegt daher die technische Aufgabe zu Grunde, eine naturnahe Oberfläche auf ein Fussbodenpaneel oder eine Möbeloberfläche zu bringen. Naturnahe Oberflächen beinhalten zum Beispiel folgende Merkmale: Aussehen, Haptik Wärmeleitfähigkeit, Härte, Oberflächenstruktur, Klang, Schlagzähigkeit.
Diese Aufgabe wird erfindungsgemäß durch ein Trägermaterial mit den Merkmalen des Anspruchs 1 gelöst.
Entsprechend wird ein Trägermaterial mit mindestens einer auf zumindest einer der Seiten des Trägermaterials angeordneten Harzschicht bereitgestellt, wobei die mindestens eine Harzschicht
- mindestens ein Formaldehydharz,
- mindestens ein Polymer ausgewählt aus einer Gruppe enthaltend Polyacrylate, Polyepoxide, Polyester, Polyurethane und langkettige Silanole , und
- mindestens eine silanhaltige Verbindung der allgemeinen Formel (I)

   **RₐSiX(₄₋ₐ)** **(I),**

   und/oder deren Hydrolyseprodukt umfasst, wobei
   - X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
   - R ein nicht-hydroliserbarer organischer Rest R ist ausgewählt aus der Gruppe umfassend Alkyl, Aryl, Alkenyl, Alkinyl, Cycloalkyl, die durch -O- oder -NHunterbrochen sein können, und
   - wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-Alkylcarbonyl-, Epoxid-, Alkenyl-, Alkinyl-, Acryl-, Acryloxy-, Methacryl-, Methacryloxy-, Cyano- und Isocyano-Gruppe, und
   - a = 0, 1, 2, 3, insbesondere 0, 1 oder 2 ist,
wobei das Trägermaterial in Form einer Papierlage, Folienlage, Stofflage vorliegt oder eine Platte aus einem Holzwerkstoff, aus Kunststoff, einem Holzwerkstoff-Kunststoff-Gemisch oder einem Verbundwerkstoff, insbesondere eine Span-, mitteldichte Faser (MDF)-, hohedichte Faser (HDF)-, Grobspan (OSB)- oder Sperrholzplatte, eine Zementfaserplatte, Gipsfaserplatte und/oder eine WPC-Platte (wood plastic composite) ist.

In der mindestens einen Harzschicht sind demnach mindestens zwei polymerisationsfähige bzw. polymere Komponenten, d.h. ein Formaldehydharz (z.B. in Form eines Aminoplastharzes wie einem Melamin-Formaldehyd-Harz) und ein weiteres reaktionsfähiges Polymer, und eine Silanverbindung enthalten. Die Harzschicht stellt demnach ein 3-Komponentensystem dar. Die Harzschicht kann auch als eine modifizierte (Hybrid)harzschicht charakterisiert werden.

Im Sinne der vorliegenden Anmeldung ist es für einen Fachmann ersichtlich, dass die Hydrolyseprodukte der Silanverbindung der allgemeinen Formel (I) sich unter der allgemeinen Formel (II) O_{b}X_{c}(OH)_{d}RₑSiO(4-b-c-d-e)/2 mit b, c, d = 0 oder 1 und e = 1, 2, 3 zusammenfassen lassen können. Die Hydrolyse und/oder Kondensation der Verbindungen der allgemeinen Formel (I) wird durch die Reaktionsbedingungen, insbesondere durch saure Reaktionsbedingungen während der Harzherstellung bedingt und beeinflusst.

Das in der vorliegenden Harzschicht verwendete Formaldehydharz ist bevorzugt ein noch nicht vollständig ausgehärtetes Formaldehydharz und weist entsprechend noch freie OH-Gruppen und z.B. im Falle eines Melamin-Formaldehyd-Harzes neben den freien OH-Gruppen auch freie NH₂-Gruppen auf. Bevorzugt weist das zum Einsatz kommende Formaldehyd-Harz Prekondensate und Oligomere auf. Der Kondensationsgrad des verwendeten Formaldehyd-Harzes, insbesondere von Melamin-Formaldehyd-Harz, entspricht bevorzugt einer Wasserverträglichkeit bei 25°C von 1: 1.7-2.2 (Verhältnis Volumen Harz:Wasser).

Die in der vorliegenden Harzschicht verwendeten Polymere weisen bevorzugt eine reaktionsfähige Gruppe, wie Carboxylgruppe oder OH-Gruppe auf. Der Anteil an freien OH-Gruppen im Polymer kann zwischen 5 und 15 Gew%, bevorzugt zwischen 8 und 12 Gew% betragen. Im Falle der Verwendung von Polyurethan als Polymer liegt der Gehalt an freien OH-Gruppen z.B. bei 9,5 Gew%.

Die Polymere werden in Abhängigkeit von der gewünschten haptischen Eigenschaft ausgewählt. Soll z.B. im Falle von naturnahen weichen Oberflächen wie Holzoberflächen eine warme Haptik erreicht werden, dann kommen bevorzugt langkettige Polymere zum Einsatz, die nicht oder nur in einem sehr geringen Umfang vernetzt sind (d.h. Polymer mit einem geringem Vernetzungsgrad). Im Falle von harten Oberflächen wie z.B. Stein- oder Fliesenmotiven mit einer eher kalten Haptik werden bevorzugt Polymere mit einem höheren Vernetzungsgrad (aber geringer als Melamin-Formaldehyd-Harz) verwendet.

Die in der vorliegenden Harzschicht verwendete Silanverbindung bzw. silanhaltige Verbindung der allgemeinen Formel (I) dient als Mittler zwischen dem Formaldehyd-Harz und dem Polymer. So ermöglichen die funktionellen Gruppen der Silanverbindung eine chemische Verbindung mit den jeweiligen reaktiven Gruppen des Formaldehyd-Harzes und des Polymers, wodurch eine gleichmäßige und homogene Mischung der verschiedenen Komponenten sichergestellt wird.

Die mindestens eine Harzschicht ist auf mindestens einer Oberfläche bzw. einer Seite, d.h. Oberseite und/oder Unterseite, des Trägermaterials angeordnet. Als Oberfläche wird dabei ein ein- oder mehrschichtiger Aufbau auf dem Trägermaterial verstanden.

Das Trägermaterial liegt in Form einer Trägerplatte, Papierlage, Folienlage oder Stofflage vor.

Im Falle einer Trägerplatte als Trägermaterial ist diese eine Platte aus einem Holzwerkstoff, aus Kunststoff, einem Holzwerkstoff-Kunststoff-Gemisch oder einem Verbundwerkstoff, insbesondere eine Span-, mitteldichte Faser (MDF)-, hochdichte Faser (HDF)-, Grobspan (OSB)- oder Sperrholzplatte, eine Zementfaserplatte, Gipsfaserplatte und/oder eine WPC-Platte (wood plastic composite). Die Schichtdicke der auf die Trägerplatte aufgetragenen Harzschicht liegt zwischen 10 und 100 µm, bevorzugt zwischen 30 und 80 µm, insbesondere bevorzugt zwischen 30 und 60 µm.
Die Oberfläche des Trägermaterials kann oberflächenbehandelt sein, z.B. im Falle einer Holzträgerplatte kann die Oberfläche abgeschliffen sein.
Es ist auch denkbar, dass zwischen Oberfläche des Trägermaterials und modifizierter (Hybrid)Harzschicht mindestens eine Primerschicht oder mindestens eine Grundierung vorgesehen sein kann. Als Primer werden bevorzugt Verbindungen auf Isocyanatbasis verwendet, wobei nicht-aromatische, aliphatische Isocyanate, wie Hexamethylendiisocyanat, Isophorondiisocyanat, oder Präpolymere, die diese Isocyanate enthalten besonders bevorzugt sind.
In einer bevorzugten Ausführungsform ist die vorliegende (Hybrid)harzschicht nicht auf einer vorhergehenden bzw. darunter liegenden Harzschicht auf einer Holzwerkstoffträgerplatte angeordnet. Insbesondere ist die vorliegende (Hybrid)harzschicht nicht auf einer formaldehydhaltigen Harzschicht wie einer Melamin-Formaldehyd-Harzschicht angeordnet, welche sich zwischen Trägermaterial (z.B. Holzwerkstoffplatte) und (Hybrid)harzschicht befindet.

In einer weiteren Ausführungsform kann vorgesehen sein, dass die mindestens eine Harzschicht auf der Oberseite des Trägermaterials (d.h. der dem Benutzer nach Einbau des Trägermaterials zugewandten Seite) vorgesehen ist, und auf der Rückseite oder Unterseite des Trägermaterials, insbesondere im Falle eine Holzwerkstoffplatte als Trägermaterial, mindestens eine schalldämmende Schicht angeordnet ist.

Derartige Holzwerkstoffplatten werden bevorzugt als Fußbodenplatte, Wandplatte, Deckenplatte, Möbelplatte oder als Schneidbrett verwendet.

Im Falle einer Papierlage als Trägermaterial werden diese nach der Beschichtung bevorzugt als Dekorpapier oder Overlaypapier zum Einsatz kommen.

In einer weiteren Ausführungsform ist das in der mindestens einen Harzschicht verwendete Formaldehyd-Harz ein Melamin-Formaldehyd-Harz, ein Melamin-Harnstoff-Formaldehyd-Harz oder ein Harnstoff-Formaldehyd-Harz.

Es ist weiterhin vorgesehen, wenn in der mindestens einen Harzschicht Poly(metha)crylate als Polyacrylat, aliphatische Polyepoxide (Polyalkyldiepoxide) oder aromatische Polyepoxide wie Bisphenol-basierte Polyepoxide als Polyepoxide, aliphatische Polyurethane als Polyurethane verwendet werden. Als Silanole kommen langkettige Silanole mit einer Moleküllänge von mindestens 20 Monomereinheiten, bevorzugt von mindestens 50 Monomereinheiten zum Einsatz.

Das Polymer wird bevorzugt als wässrige Suspension verwendet, die in geeigneterweise stabilisiert wird.

In einer weiteren Ausführungsform beträgt der Mengenanteil an Polymer in der vorliegenden Harzschicht mindestens 20 Gew%, bevorzugt mindestens 30 Gew%, insbesondere bevorzugt mindestens 50 Gew%. Entsprechend liegt das Masseverhältnis von Formaldehydharz und Polymer in einem Bereich zwischen 20 : 80, bevorzugt 30 : 70, insbesondere bevorzugt 50 : 50.

Der Mengenanteil an Silanverbindung in der Harzschicht beträgt mindestens 3 Gew%, bevorzugt 5 Gew%, weiterhin bevorzugt mindestens 10 Gew%. Insbesondere ist ein Mengenanteil zwischen 10 und 20 Gew% bevorzugt.

Der in der Silanverbindung der allgemeinen Formel (I) beschriebene Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

In einer bevorzugten Ausführungsform ist X ausgewählt aus einer Gruppe enthaltend OH, C₁₋₆-Alkoxy, insbesondere Methoxy, Ethoxy, n-Propoxy und Butoxy.

Der nicht- hydrolisierbare Rest R ist bevorzugt ausgewählt aus einer Gruppe umfassend C₁-C₃₀-Alkyl, insbesondere C₅-C₂₅-Alkyl, C₂-C₆-Alkenyl, C₂-C₆-Alkinyl und C₆-C₁₀-Aryl.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist vorliegend ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest R enthalten sein kann, umfasst vorteilhafterweise ein Epoxid-, insbesondere ein Glycidyl- oder Glycidyloxy-Gruppe, ein Amin- oder eine Isocyano-Gruppe.

Die Auswahl der geeigneten funktionellen Gruppe Q erfolgt bevorzugt in Abhängigkeit von dem verwendeten Polymer. So ist im Falle der Verwendung eines Polyacrylates als Polymer eine Silan-Verbindung mit einer Methacryl- oder Methacryloxy-Gruppe als funktionelle Gruppe Q von Vorteil. Bei Verwendung eines Polyepoxids als Polymer wird bevorzugt eine Silan-Verbindung mit einer Epoxy-Gruppe als funktionelle Gruppe zum Tragen kommen.

In einer besonders bevorzugten Ausführungsform werden als Silane Tetraethylorthosilan oder Methyltriethoxysilan oder auch Gamma-Isocyanatopropyltriethoxysilan oder ein Gycidyloxypropyltriethoxysilan verwendet.

Wie beschrieben, kann der nicht-hydrolisierbare Rest R über mindestens eine funktionelle Gruppe Q verfügen. Darüber hinaus kann der Rest R auch mit weiteren Resten substituiert vorliegen. Folgende Reste oder Substituenten können dabei vorliegen: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁₋C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie vorliegend verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie vorliegend verwendet, bezeichnet aromatische Kohlenwasserstoffe, beispielsweise Phenyl, Benzyl, Naphthyl, oder Anthryl. Substituierte Arylgruppen sind Arylgruppen, die mit einem oder mehreren Substituenten, wie oben definiert, substituiert sein können.

Der Begriff "Cycloalkyl" umfasst die Gruppen Cyclopropyl, Cyclobutyl, Cyclopentyl, Cyclohexyl und Cycloheptyl.

In einer weiteren Ausführungsform ist vorgesehen, dass mehr als eine Harzschicht, bevorzugt zwei, drei oder vier Harzschichten, auf dem Trägermaterial angeordnet sind. Im Falle von mehr als einer Harzschicht können die Harzschichten die gleiche oder eine andere Zusammensetzung aufweisen. Bei einem mehrschichtigen Aufbau können die einzelnen Harzschichten demnach aus verschiedenen Hybridharzen bestehen und auf diese Weise können unterschiedliche Eigenschaften eingestellt werden.

In einer weitergehenden Ausführungsform des vorliegenden Trägermaterials ist vorgesehen, dass in der Harzschicht Nanopartikel mit einer Größe kleiner 500 nm verwendet werden. Die verwendeten Nanopartikel weisen eine Größe zwischen 2 und 400 nm, bevorzugt zwischen 2 bis 100 nm, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel lonenaustauschprozess, Plasma-Prozess, Sol-Gel Verfahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

Es ist ebenfalls vorgesehen, dass die mindestens eine Harzschicht Füllstoffe, Netzmittel oder weitere Additive umfasst.

Die Füllstoffe sind vorliegend ausgewählt aus einer Gruppe enthaltend Fasern, verschleißhemmende Materialien, leitfähige Substanzen, wärmeleitfähige Materialien, Materialien zur Anpassung der Haptik oder Materialien zur Reduzierung von Abdrücken z.B. von Fingerabdrücken.

Zur Verbesserung der Abrieb-/Verschleißfestigkeit der Harzschicht können der Harzsschicht verschleißhemmende Partikel zugegeben werden. Diese können u. a. aus Aluminiumoxid (Korund), Carbiden z.B. Borcarbiden, Siliziumcarbiden, Siliziumdioxid und/oder Glaskugeln bestehen. Wichtig ist dabei, dass die Größe der Partikel auf die Auftragsmenge der Harzschicht abgestimmt ist. Die Größe der verschleißhemmenden Partikel kann im Bereich zwischen 1 und 20 µm, bevorzugt 5 und 15 µm, insbesondere bevorzugt zwischen 7 und 12 µm liegen. Bei einer Schichtdicke der Harzschicht von z. B. 10 - 12 µm sollten die verschleißhemmenden Materialien Partikelgrößen von 8 - 10 µm nicht überschreiten.

Neben den abriebfesten Partikeln können in der Harzschicht auch weitere Füllstoffe oder Additive, wie natürliche oder synthetische Fasern, Flammschutzmittel und/oder luminiszierende, antibakterielle Stoffe vorhanden sein.

Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen.

Als luminiszierende Stoffe können fluoreszierende oder phosphorisierende Stoffe, insbesondere Zinksulfit und Alkalialuminate und Silberverbindungen als Antibakterium zum Einsatz kommen. Die luminiszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

Die leitfähigen Substanzen können ausgewählt sein aus der Gruppe enthaltend Russ, Kohlefasern, Metallpulver, insbesondere Kohlenstoffnanoröhren. Es können auch Kombinationen dieser Substanzen zum Einsatz kommen.

Die verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern.

Besonders bevorzugte Füllstoffe oder Additive sind:
- Zellulosefasern zur Beeinflussung der Haptik (Wärmeleitfähigkeit, Oberflächenstruktur), Klangbild und Optik;
- Hohlkugeln zur Beeinflussung der Wärmeleitfähigkeit;
- Holzschliff zur Beeinflussung der Haptik (Wärmeleitfähigkeit, Oberflächenstruktur), Klangbild und Optik;
- Korund zur Erhöhung der Kratzfestigkeit;
- Organische Partikel (z.B. PUR-Kügelchen verschiedener Größe) bzw. anorganische Partikel (z.B. Al₂O₃ oder SiO₂ Vollpartikel) zur weiteren Anpassung der Haptik;
- Verschiedene Sandarten;
- Leitfähige Partikel zum Aufbau einer antistatischen Oberfläche; und/oder
- Silikone zur Verbesserung der Antifingerprint Eigenschaft.

Zur Verbesserung der Verteilung der Füllstoffe in der Harzschicht können Netzmittel bzw. Dispergieradditive zugegeben werden. Typische Netzmittel sind Tenside, Fettsäuren oder Derivate von Polysiloxanen. Derartige Netzmittel können auch zum Tränken von Papieren zum Einsatz kommen.

Eine weitere Modifikation der (Hybrid)harzschicht kann im Einbringen von Strukturen wie z.B. Vertiefungen oder Erhöhungen in die (Hybrid)harzschicht bestehen. Derartige Strukturen können mit strukturierten Auftragswalzen in der (Hybrid)harzschicht erzeugt werden, die wenn nötig und/oder gewünscht den verwendeten Dekoren angepasst werden können. Derartige Methoden zur Strukturierung von Oberflächen sind z.B. aus der EP 2 251 501 B1 bekannt.

Das mindestens eine Harz zur Beschichtung des vorliegenden Trägermaterials wird in einem Verfahren umfassend die folgenden Schritte hergestellt:
- Bereitstellen von mindestens einem Formaldehyd-Harz,
- Zugabe von mindestens einer Silanverbindung der allgemeinen Formel (I) zu dem mindestens einen Formaldehyd-Harz;
- Bereitstellen einer Suspension von mindestens einem Polymer ausgewählt aus einer Gruppe enthaltend Polyacrylate, Polyepoxide, Polyester, und Polyurethane;
- Zugabe der Polymersuspension zu der Mischung aus Formaldehyd-Harz und Silanverbindung der allgemeinen Formel (I); und
- Zugabe von mindestens einem Katalysator, insbesondere einer hydrolytisch aktiven Verbindung, zu der Mischung.

Als hydrolytisch wirksame Verbindungen werden bevorzugt sauer oder basisch bzw. alkalisch reagierende Verbindungen eingesetzt.

Die sauer reagierenden Verbindungen können Substanzen ausgewählt aus der Gruppe enthaltend gesättigte oder ungesättigte Mono- und Polycarbonsäuren, insbesondere Octadecansäure, Acrylsäure, Methacrylsäure oder Crotonsäure, ss-Dicarbonylverbindungen, insbesondere Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren, insbesondere Polyhydroxyasparaginsäure und Polyhydroxystearinsäure sein. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid, verwendet werden.

Die alkalisch reagierenden Verbindungen sind bevorzugt ausgewählt aus der Gruppe enthaltend Mono- und Polyamine, insbesondere Methylamin, oder Ethylendiamin, Ammoniak, Alkali - und Erdalkalihydroxide, insbesondere NaOH.

In einer Variante des obigen Verfahrens wird das Harz zusätzlich mit den oben angeführten Netzmitteln, Füllstoffen und/oder weiteren Additiven vermischt.

Das vorliegende Trägermaterial wird in einem Verfahren umfassend die folgenden Schritte hergestellt:
- Herstellen eines oben beschriebenen Harzes;
- Auftragen des Harzes auf das mindestens eine Trägermaterial, und
- Verpressen des mit dem Harz beschichteten Trägermaterials in einer Heißpresse.

In einer Variante des Verfahrens zur Herstellung des Trägermaterials ist vorgesehen, dass vor dem Verpressen des mit dem Harzschicht versehenen Trägermaterials mindestens ein Trennmittel (z.B. Polysiloxane wie Polymethylsiloxan, oder Fluormodifizierte Kunststoffe wie Teflon) auf die Harzschicht, in die Harzschicht und/oder auf die Oberfläche des Pressbleches aufgebracht wird.

Die Harzschicht wird anschließend zusammen mit dem Trägermaterial unter üblichen Bedingungen (Taktzeit, Presstemperatur) verpresst. So kann das Harzgemisch bei einem Druck zwischen 3 und 8 MPa und einer Temperatur zwischen 150 und 250°C unter Ausbildung der Oberflächenschicht auf dem Trägermaterial ausgehärtet werden.

Die Erfindung wird nachfolgend an mehreren Ausführungsbeispielen näher erläutert.

### Ausführungsbeispiel 1: Ausbildung einer holznahen Oberfläche

50 g einer Melaminharzmischung (ohne Starter) werden auf 50 °C erwärmt. Anschließend werden 2,03 g Tetraethylorthosilikat hinzugegeben. Unter Rühren werden weiterhin 50 g eines wässrigen Carboxylgruppen haltigen Polyacrylats der Fa. BASF (Acronal DS 3591) hinzugegeben. Nach Zugabe von 0,25 g para-Toluolsulfonsäure als Katalysator wird eine Hydrolyse- und Kondensationsreaktion gestartet. Die Mischung wird noch weitere 30 Minuten gerührt.

Durch Zugabe von 3g Hohlkugeln (K20 der Firma 3M) wird die Wärmeleitfähigkeit eingestellt. Acronal DS 3591 sorgt dabei für eine Erhöhung der Elastizität.

Das fertige Hybridharz ist ca. 1 Tag lagerstabil und kann nun wie übliche Melaminharze weiterverarbeitet werden.

### Ausführungsbeispiel 2: Ausbildung einer steinartigen Oberfläche

50 g einer Melaminharzmischung (ohne Starter) werden auf 50 °C erwärmt. Anschließend werden 1,78 g Methyltriethoxysilan hinzugegeben. Unter Rühren werden weiterhin 50 g eines U 9380 der Fa. Alberdingk hinzugegeben. Nach Zugabe von 0,2 g Schwefelsäure (1 molar) als Katalysator wird eine Hydrolyse- und Kondensationsreaktion gestartet. Die Mischung wird noch weitere 55 Minuten gerührt.

Durch Zugabe von 7g Quarzsand und 3g Korund (ZWSK 220, Treibacher) wird die Härte und Wärmeleitfähigkeit, sowie Abriebfestigkeit eingestellt. Das zugegebene Polyurethan verringert die Elastizität.

Das fertige Hybridharz ist ca. 1 Tag lagerstabil und kann nun wie übliche Melaminharze weiterverarbeitet werden.

## Patentansprüche

1. Trägermaterial mit mindestens einer auf zumindest einer der Seiten des Trägermaterials angeordneten Harzschicht
**dadurch gekennzeichnet, dass**
die mindestens eine Harzschicht
- mindestens ein Formaldehydharz,
- mindestens ein Polymer ausgewählt aus einer Gruppe enthaltend Polyacrylate, Polyepoxide, Polyester, Polyurethane und langkettige Silanole, und
- mindestens eine silanhaltige Verbindung der allgemeinen Formel (I)
**RₐSiX₍₄₋ₐ₎** **(I),**
und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, substituiertes und nicht-substituiertes Alkinyl, Cycloalkyl, die durch -O- oder-NH- unterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist,
wobei das Trägermaterial in Form einer Papierlage, Folienlage, Stofflage vorliegt oder eine Platte aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) ist

2. Trägermaterial nach einem der vorhergehenden Ansprüche, **dadurch gekennzeichnet, dass** das Formaldehyd-Harz ein Melamin-Formaldehyd-Harz, ein Melamin-Harnstoff-Formaldehyd-Harz oder ein Harnstoff-Formaldehyd-Harz ist.

3. Trägermaterial nach einem der vorhergehenden Ansprüche, **dadurch gekennzeichnet, dass** das Poly(metha)crylate als Polyacrylat, aliphatische Polyepoxide (Polyalkyldiepoxide) oder aromatische Polyepoxide als Polyepoxide, aliphatische Polyurethane als Polyurethane verwendet werden.

4. Trägermaterial nach einem der vorhergehenden Ansprüche, **dadurch gekennzeichnet, dass** das Masseverhältnis von Formaldehydharz und Polymer in einem Bereich zwischen 20 : 80, bevorzugt 30 : 70, insbesondere bevorzugt 50 : 50 beträgt

5. Trägermaterial nach einem der vorhergehenden Ansprüche, **dadurch gekennzeichnet, dass** X ausgewählt ist aus einer Gruppe enthaltend OH, C₁₋₆-Alkoxy, insbesondere Methoxy, Ethoxy, n-Propoxy und Butoxy.

6. Trägermaterial nach einem der vorhergehenden Ansprüche, **dadurch gekennzeichnet, dass** mehr als eine Harzschicht, bevorzugt zwei, drei oder vier Harzschichten, auf dem Trägermaterial angeordnet sind.

7. Trägermaterial nach einem der vorhergehenden Ansprüche, **dadurch gekennzeichnet, dass** in der Harzschicht Nanopartikel mit einer Größe kleiner 500 nm enthalten sind.

8. Trägermaterial nach einem der vorhergehenden Ansprüche, **dadurch gekennzeichnet, dass** die mindestens eine Harzschicht Füllstoffe, Netzmittel oder weitere Additive umfasst.

9. Trägermaterial nach Anspruch 8, **dadurch gekennzeichnet, dass** die Füllstoffe ausgewählt sind aus einer Gruppe enthaltend Fasern, verschleißhemmende Materialien, leitfähige Substanzen, wärmeleitfähige Materialien, Materialien zur Anpassung der Haptik oder Materialien zur Reduzierung von Abdrücken.

10. Verfahren zur Herstellung von mindestens einem Harz zur Beschichtung des Trägermaterials nach einem der vorhergehenden Ansprüche umfassend die Schritte:
- Bereitstellen von mindestens einem Formaldehyd-Harz,
- Zugabe von mindestens einer Silanverbindung der allgemeinen Formel (I) zu dem mindestens einen Formaldehyd-Harz;
- Bereitstellen einer Suspension von mindestens einem Polymer ausgewählt aus einer Gruppe enthaltend Polyacrylate, Polyepoxide, Polyester, und Polyurethane;
- Zugabe der Polymersuspension zu der Mischung aus Formaldehyd-Harz und Silanverbindung der allgemeinen Formel (I); und
- Zugabe von mindestens einem Katalysator, insbesondere einer hydrolytisch aktiven Verbindung, zu der Mischung.

11. Verfahren nach Anspruch 10, **dadurch gekennzeichnet, dass** das Harz mit Netzmitteln, Füllstoffen und/oder weiteren Additiven vermischt wird.

12. Verfahren zur Herstellung eines Trägermaterials nach einem der Ansprüche 1 bis 9 umfassend die Schritte:
- Herstellen eines Harzes nach einem der Ansprüche 10 oder 11,
- Auftragen des Harzes auf das mindestens eine Trägermaterial, und
- Verpressen des mit dem Harz beschichteten Trägermaterials in einer Heißpresse.

13. Verfahren nach Anspruch 12, **dadurch gekennzeichnet, dass** vor dem Verpressen des mit der Harzschicht versehenen Trägermaterials mindestens ein Trennmittel auf die Harzschicht, in die Harzschicht und/oder auf die Oberfläche des Pressbleches aufgebracht wird.

## Claims

1. Support material with at least one resin layer arranged on at least one of the sides of the support material
**characterised in that**
the at least one resin layer comprises
- at least one formaldehyde resin,
- at least one polymer selected from a group containing polyacrylates, polyepoxides, polyesters, polyurethanes and long-chain silanols, and
- at least one silane-containing compound of general formula (I)
**RₐSiX₍₄₋ₐ₎** **(I)**,
and/or the hydrolysis product thereof, wherein
- X is H, OH or a hydrolysable residue selected from the group comprising halogen, alkoxy, carboxy, amino, monoalkylamino or dialkylamino, aryloxy, acyloxy, alkylcarbonyl,
- R is a non-hydrolysable organic residue R, selected from the group comprising alkyl, aryl, alkenyl, substituted and unsubstituted alkynyl and cycloalkyl, all of which can be interrupted by -O- or -NH-, and
- wherein R can have at least one functional group Q, which is selected from a group containing a hydroxy, ether, amino, monoalkylamino, dialkylamino, anilino, amide, carboxy, mercapto, alkoxy, aldehyde, alkylcarbonyl, epoxide, alkenyl, alkynyl, acrylic, acyloxy, methacrylic, methacryloxy, cyano and isocyano group, and
- a is 0, 1, 2, 3, in particular 0, 1 or 2,
wherein the support material is in the form of a paper layer, film layer or fabric layer or is a sheet consisting of a wood-based material, plastic, a wood-based material/plastic blend or a composite material, in particular a chipboard, medium-density fibreboard (MDF), high-density fibreboard (HDF), oriented-strand board (OSB) or plywood sheet, a cement fibreboard, plasterboard and/or a WPC (wood-plastic composite) sheet.

2. Support material according to one of the preceding claims, **characterised in that** the formaldehyde resin is a melamine-formaldehyde resin, a melamine-urea-formaldehyde resin or a urea-formaldehyde resin.

3. Support material according to one of the preceding claims, **characterised in that** poly(meth)acrylates are used as polyacrylate, aliphatic polyepoxides (polyalkyldiepoxides) or aromatic polyepoxides as polyepoxides and aliphatic polyurethanes as polyurethanes.

4. Support material according to one of the preceding claims, **characterised in that** the mass ratio of formaldehyde and polymer is in a range between 20:80, preferably 30:70, particularly preferably 50:50.

5. Support material according to one of the preceding claims, **characterised in that** X is selected from a group containing OH, C₁₋₆ alkoxy, in particular methoxy, ethoxy, n-propoxy and butoxy.

6. Support material according to one of the preceding claims, **characterised in that** more than one resin layer, preferably two, three or four resin layers, are arranged on the support material.

7. Support material according to one of the preceding claims, **characterised in that** the resin layer contains nanoparticles of a size less than 500 nm.

8. Support material according to one of the preceding claims, **characterised in that** the at least one resin layer comprises fillers, wetting agents or other additives.

9. Support material according to claim 8, **characterised in that** the fillers are selected from a group containing fibres, wear-inhibiting materials, conductive substances, heat-conductive materials, materials for adjusting tactile properties or materials for reducing indentations.

10. Method for producing at least one resin for coating the support material according to one of the preceding claims, comprising the following steps:
- providing at least one formaldehyde resin;
- adding at least one silane compound of general formula (I) to the at least one formaldehyde resin;
- providing a suspension of at least one polymer selected from a group containing polyacrylates, polyepoxides, polyesters and polyurethanes;
- adding the polymer suspension to the mixture of formaldehyde resin and silane compound of general formula (I); and
- adding at least one catalyst, in particular a hydrolytically active compound, to the mixture.

11. Method according to claim 10, **characterised in that** the resin is mixed with wetting agents, fillers and/or other additives.

12. Method for producing a support material according to one of claims 1 to 9, comprising the following steps:
- producing a resin according to one of claims 10 or 11,
- applying the resin to the at least one support material, and
- press-moulding the resin-coated support material in a hot press.

13. Method according to claim 12, **characterised in that** before press-moulding the resin-coated support material, at least one release agent is applied onto the resin layer, into the resin layer and/or onto the surface of the press platen.

## Revendications

1. Matériau de support avec au moins une couche de résine disposée sur au moins un des côtés du matériau de support
**caractérisé en ce que**
l'au moins une couche de résine comprend
- au moins une résine de formaldéhyde,
- au moins un polymère choisi parmi un groupe contenant des polyacrylates, des polyépoxydes, des polyesters, des polyuréthanes et des silanols à chaîne longue, et
- au moins un composé contenant des silanes de la formule générale (I)
**RaSiX₍₄₋ₐ₎** **(I)**
et/ou son produit d'hydrolyse, dans lequel
- X, H, OH ou un radical hydrolysable est choisi parmi le groupe comprenant l'halogène, l'alkoxy, le carboxy, l'amino, le monoalkylamino ou le dialkylamino, l'aryloxy, l'acyloxy, l'alkylcarbonyl,
- R est un radical organique non hydrolysable R choisi parmi le groupe comprenant l'alkyle, l'aryle, l'alcényle, de l'alcynyle substitué et non substitué, le cycloalkyle, qui peuvent être interrompus par -O- ou -NH-, et
- dans lequel R peut présenter au moins un groupe fonctionnel Q, qui est choisi parmi un groupe contenant un groupe hydroxy, éther, amino, monoalkylamino, dialkylamino, anilino, amide, carboxy, mercapto, alkoxy, aldéhyde, alkylcarbonyle, époxyde, alcényle, alcynyle, acryle, acryloxy, méthacryle, méthacryloxy, cyano et isocyano, et
- a = 0, 1, 2, 3, en particulier est 0, 1 ou 2,
dans lequel le matériau de support est présent sous la forme d'une couche de papier, d'une couche de film ou d'une couche de matière ou est un panneau composé d'un matériau dérivé du bois, composé de matière plastique, d'un mélange de matériau dérivé du bois et de matière plastique ou d'un matériau composite, en particulier un panneau aggloméré, un panneau de fibres à densité moyenne (MDF), un panneau de fibres à densité élevée (HDF), un panneau de grandes particules orientées (OSB) ou un panneau de contreplaqué, un panneau de fibres de ciment, un panneau en plâtre-fibre ou un panneau en composite bois-plastique (WPC).

2. Matériau de support selon la revendication précédente, **caractérisé en ce que** la résine de formaldéhyde est une résine de mélamine-formaldéhyde, une résine de mélamine-urée-formaldéhyde ou une résine d'urée-formaldéhyde.

3. Matériau de support selon l'une quelconque des revendications précédentes, **caractérisé en ce que** des poly(métha)crylates sont utilisés en tant que polyacrylate, des polyépoxydes aliphatiques (polyalkyldiépoxydes) ou des polyépoxydes aromatiques sont utilisés en tant que polyépoxydes, des polyuréthanes aliphatiques sont utilisés en tant que polyuréthanes.

4. Matériau de support selon l'une quelconque des revendications précédentes, **caractérisé en ce que** le rapport massique entre la résine de formaldéhyde et le polymère présente une valeur située dans une plage comprise entre 20:80, de manière 30:70, en particulier de manière préférée 50:50.

5. Matériau de support selon l'une quelconque des revendications précédentes, **caractérisé en ce que** X est choisi parmi un groupe contenant du OH, de l'alcoxy en C₁₋₆, en particulier du méthoxy, de l'éthoxy, du n-propoxy et du butoxy.

6. Matériau de support selon l'une quelconque des revendications précédentes, **caractérisé en ce que** plus d'une couche de résine, de manière préférée deux, trois ou quatre couches de résine, sont disposées sur le matériau de support.

7. Matériau de support selon l'une quelconque des revendications précédentes, **caractérisé en ce que** des nanoparticules avec une taille inférieure à 500 nm sont contenues dans la couche de résine.

8. Matériau de support selon l'une quelconque des revendications précédentes, **caractérisé en ce que** l'au moins une couche de résine comprend des charges, des agents mouillants ou d'autres additifs.

9. Matériau de support selon la revendication 8, **caractérisé en ce que** les charges sont choisies parmi un groupe contenant des fibres, des matériaux à effet anti-usure, des substances conductrices, des matériaux thermoconducteurs, des matériaux servant à l'ajustement de la perception tactile ou des matériaux servant à réduire des empreintes.

10. Procédé servant à fabriquer au moins une résine servant à revêtir le matériau de support selon l'une quelconque des revendications précédentes, comprenant les étapes :
- de mise à disposition d'au moins une résine de formaldéhyde ;
- d'ajout d'au moins un composé de silane de la formule générale (I) à l'au moins une résine de formaldéhyde ;
- de mise à disposition d'une suspension d'au moins un polymère choisi parmi un groupe contenant des polyacrylates, des polyépoxydes, des polyesters et des polyuréthanes ;
- d'ajout de la suspension de polymère au mélange composé de résine de formaldéhyde et de composé de silane de la formule générale (I) ; et
- d'ajout d'au moins un catalyseur, en particulier d'un composé hydrolytiquement actif au mélange.

11. Procédé selon la revendication 10, **caractérisé en ce que** la résine est mélangée à des agents mouillants, des charges et/ou à d'autres additifs.

12. Procédé servant à fabriquer un matériau de support selon l'une quelconque des revendications 1 à 9, comprenant les étapes :
- de fabrication d'une résine selon l'une quelconque des revendications 10 ou 11,
- d'application de la résine sur l'au moins un matériau de support, et
- de compression du matériau de support revêtu de la résine dans une presse chauffante.

13. Procédé selon la revendication 12, **caractérisé en ce qu'**au moins un agent de séparation est appliqué sur la couche de résine, dans la couche de résine et/ou sur la surface de la tôle de presse avant la compression du matériau de support pourvu de la couche de résine.
